# EUROPÄISCHE PATENTSCHRIFT

(11) **EP 1 562 261 B1**
(45) Veröffentlichungstag und Bekanntmachung des Hinweises auf die Patenterteilung: **13.02.2013**
(21) Anmeldenummer: 05010275.5
(22) Anmeldetag: 09.07.2003
(51) Int. Cl.: F16B 37/06, H01R 4/30

(54) **Hohles Befestigungselement zur elektrisch leitfähigen Anbringung einer elektrischen Anschlusseinrichtung an ein Blechteil sowie Zusammenbauteil mit diesem Befestigungselement**
Hollow fixing element for attachment of an electrically conductive connecting device onto a metallic plate and assembly with this fixing element
Element de fixation creux pour l'attachement d'un élément de connexion électriquement conducteur à une plaque métallique et assemblage comprenant cet élément de fixation

(30) Priorität: 20.09.2002 DE 10243759
(43) Veröffentlichungstag der Anmeldung: 10.08.2005
(62) Teilanmeldung aus: 03807744.2
(73) Patentinhaber: PROFIL-Verbindungstechnik GmbH & Co. KG, 61381 Friedrichsdorf (DE)
(72) Erfinder: Babej, Jiri, 35423 Lich (DE); Humpert, Richard, Dr., 61191 Rosbach v.d.H (DE); Vieth, Michael, 61118 Bad Vilbel (DE)
(74) Vertreter: Manitz, Finsterwald & Partner GbR

(56) Entgegenhaltungen:
- EP-B1- 1 381 785
- DE-A1- 3 447 006
- DE-A1- 4 039 472
- DE-A1- 10 114 200
- DE-A1- 10 119 505
- FR-A- 2 792 270
- US-A- 3 014 609

## Beschreibung

Die vorliegende Erfindung betrifft ein Verfahren zur Erzeugung einer elektrisch leitenden Verbindung zwischen einer, eine Ausnehmung aufweisenden elektrischen Anschlusseinrichtung wie ein Kabelschuh und einem Blechteil, bei dem ein hohles Befestigungselement mit dem Blechteil verdrehfest vernietet wird und hierdurch eine elektrisch leitende Verbindung zwischen Befestigungselement und Blechteil erzeugt wird und das so hergestellte Zusammenbauteil anschließend mit einer elektrisch nicht leitenden oder schlecht leitenden Schutzbeschichtung, wie beispielsweise eine Lackschicht oder eine Pulverbeschichtung, versehen wird. Ferner betrifft die Erfindung ein Befestigungselement zur Anwendung des Verfahrens und ein Zusammenbauteil bestehend aus dem Befestigungselement und einem Blechteil.

Ein Befestigungselement der eingangs genannten Art ist beispielsweise aus der EP-A-539793 bekannt.

Das Zusammenbauteil, welches entsteht, wenn das Befestigungselement an einem Blechteil angebracht ist, kann entsprechend dem eingangs genannten Verfahren mit einer Schutzbeschichtung, wie beispielsweise eine Lackschicht oder Pulverbeschichtung, versehen werden. Dies ist in der EP-A-539793 nicht ausdrücklich beschrieben.

Das Mutterelement gemäß EP-A-539793 kann nicht selbststanzend in ein Blechteil eingebracht werden, sondern das Blechteil muß vorgelocht werden. Weiterhin umfaßt die Blechvorbereitung bei der EP-A-539793 die Erzeugung einer axial vorstehenden Ringlippe in das Blechteil, die eine Öffnung begrenzt, in die der Nietabschnitt des Befestigungselementes hineingeführt werden muß. Bei dieser Operation steht die Ringlippe auf der Seite des Blechteils vor, von der das Befestigungselement eingebracht wird. Die vorstehende Lippe mit der vorgefertigten Öffnung bedeutet in der Praxis, daß das Befestigungselement mit hoher Genauigkeit in bezug auf das Blechteil ausgerichtet werden muß, um die ordnungsgemäße Anbringung des Befestigungselementes sicherzustellen.

Ferner besteht bei dem Zusammenbauteil, das entsteht, wenn ein Befestigungselement nach der EP-A-539793 an ein Blechteil angebracht ist, das Problem, dass die auf das Zusammenbauteil aufgebrachte Schutzbeschichtung es schwierig macht, eine elektrisch leitende Verbindung von einem Kabelschuh zum Zusammenbauteil zu erzeugen. Es müsste die Schutzbeschichtung arbeitsintensiv von der kritischen Stelle entfernt werden oder es müsste, ebenfalls arbeitsintensiv, an der Stelle, wo der Kabelschuh angebracht werden soll, das Bauteil so abgedeckt werden, dass die sich dort ablagernde Schutzbeschichtung mit der Abdeckung entfernt werden kann. Ungünstig bei diesem Verfahren ist weiterhin, dass bei Entfernung der Abdeckung freigelegte Oberflächenbereiche des Befestigungselements existieren, die nicht mehr mit der Schutzbeschichtung versehen sind und langfristig korrodieren können. Dies ist nicht nur unansehniich, sondern die fortsetzende Korrosion kann zu einer unerwünschten Verschlechterung des elektrischen Kontakts zwischen der Anschlusseinrichtung und dem Befestigungselement führen.

Die DE 40 39 742 A1 offenbart ein Befestigungselement gemäß dem Oberbegriff von Anspruch 1. Weitere Befestigungselemente sind den Druckschriften FR-A-2 792 270 und EP 1 381 758 B 1 zu entnehmen.

Aufgabe der vorliegenden Erfindung ist es, ein Verfahren bzw. ein Befestigungselement und ein Zusammenbauteil der eingangs genannten Art so zu verbessern, dass eine qualitativ hochwertige elektrische Verbindung zwischen der elektrischen Anschlusseinrichtung und dem Blechteil kostengünstig erreichbar ist, ohne dass die Schutzbeschichtung die Qualität der elektrischen Verbindung beeinträchtigt und ohne dass aufwendige Maßnahmen ergriffen werden müssen, um die Schutzbeschichtung zu entfernen.

Zur Lösung dieser Aufgabe wird erfindungsgemäß ein Befestigungselement gemäß Anspruch 1 sowie ein Zusammenbauteil gemäß Anspruch 7 vorgeschlagen.

Durch die Anbringung eines solchen Befestigungselements an ein Blechteil ergibt sich erfindungsgemäß dann ein Zusammenbauteil bestehend aus einem Blechteil und einem an diesem über eine Nietverbindung angebrachten hohlen Befestigungselement, wobei das Befestigungselement mittels Verdrehsicherungsmerkmalen verdrehsicher am Blechteil befestigt ist und das Befestigungselement und das Blechteil gemeinsam mit einer elektrisch nicht leitenden oder schlecht leitenden Schutzbeschichtung beschichtet sind und ein elektrisch leitender Pfad zwischen dem Befestigungselement und dem Blechteil im Bereich der Nietverbindung und/oder den Verdrehsicherungsmerkmalen vorgesehen ist. Das Zusammenbauteil zeichnet sich dadurch aus, dass das Befestigungselement eine glatte Zylinderbohrung zur Aufnahme einer Gewinde formenden oder schneidenden Schraube aufweist und dass an der der Nietverbindung abgewandten Stirnseite des Befestigungselements dieses eine Aufnahme für die verdrehsichere Anbringung der elektrischen Anschlusseinrichtung aufweist.

Das Befestigungselement wird bevorzugt selbststanzend an das Blechteil angebracht. D.h., dass entweder der Nietabschnitt als Stanz- und Nietabschnitt ausgebildet sein kann oder ein rohrförmiger Teil des Befestigungselements im Bereich des Nietabschnitts als Stanzeinrichtung benutzt werden kann, um ein Loch in das Blechteil zu stanzen. Die Kraft, die erforderlich ist, um den Stanzvorgang durchzuführen, kann beispielsweise wie üblich bei der Anbringung von Befestigungselementen an Blechteile von einer Presse geliefert werden, die für die Durchführung des Anbringungsverfahrens sorgt oder aber von einem Roboter oder andersartigen Werkzeugen zur Verfügung gestellt werden. Die Verwendung von Befestigungselementen in selbststanzenden Ausführungen hat nicht nur den Vorteil, dass hierdurch ein Arbeitsschritt im Sinne der Vorlochung des Blechteils vermieden werden kann, sondern der Stanzvorgang sorgt für saubere metallische Flächen am Befestigungselement und am Blechteil, die für einen niedrigen Übergangswiderstand zwischen dem Befestigungselement und dem Blechteil sorgen, d.h. für eine qualitativ hochwertige elektrische Verbindung an den entsprechenden Stellen.

Durch die verdrehsichere Anbringung des Befestigungselements am Blechteil wird ferner im Bereich der Verdrehsicherungsmerkmale, die üblicherweise die Form von Rippen aufweisen und gegebenenfalls zur Sicherstellung eines noch besseren elektrischen Übergangs zum Blechteil scharfkantig ausgeführt werden können, eine hochwertige elektrische Verbindung zwischen dem Befestigungselement und dem Blechteil ebenfalls erreicht. Wird nun das so erzeugte Zusammenbauteil mit einer elektrisch nicht leitenden oder schlecht leitenden Schutzschicht versehen, werden die elektrisch leitenden Übergangsbereich zwischen dem Zusammenbauteil und dem Blechteil von außen versiegelt, so dass Korrosion an diesen Stellen nicht zu befürchten ist. D.h. es entstehen zwischen dem Stanzabschnitt des Befestigungselements und dem Blechteil und zwischen den Verdrehsicherungsmerkmalen und dem Blechteil leitende Übergänge, wo die Elemente so dicht aneinander liegen, dass ein Eindringen der Schutzbeschichtung an diesen Stellen nicht auftritt. Die Versiegelung des Zusammenbauteils durch die Schutzschicht verhindert auch, dass Sauerstoff und Feuchtigkeit an diese leitenden Übergängen gelangt, wodurch Korrosion an diesen Stellen langfristig verhindert wird.

Die Schutzbeschichtung bedeckt aber vollständig die außen liegenden Oberflächenbereiche des Befestigungselements und durchdringt auch häufig die Bohrung des hohlen Befestigungselements, insbesondere dann, wenn elektrostatische Hilfsmittel bei der Lackierung verwendet werden. An dieser Stelle soll kurz erwähnt werden, dass die erwähnte Bohrung streng genommen nicht durch ein Bohrwerkzeug erzeugt werden muss, sondern könnte auch durch Kaltschlagwerkzeuge oder durch Stanzvorgänge oder anderweitig erzeugt werden. Die Bezeichnung Bohrung ist daher so auszulegen, dass sie nicht auf ein bestimmtes Herstellungsverfahren beschränkt ist.

Durch die Verwendung einer Gewinde schneidenden oder formenden Schraube, um die elektrische Anschlusseinrichtung an die freiliegende Stirnseite des Befestigungselements anzuschrauben, wird einerseits eine intensive, mechanische Bearbeitung der Bohrung des Befestigungselements durch die Schraube erzeugt, so dass auch hier hochwertige elektrische Übergänge zwischen der Schraube und dem Befestigungselement geschaffen werden. Etwaige, in der Bohrung vorhandene Schutzbeschichtung wird zumindest stellenweise durch die Einschraubung der Schraube weggescharrt bzw. weggeschnitten und es entsteht ein erheblicher Kontaktdruck zwischen Schraube und Befestigungselement, so dass auch in diesen Bereichen langfristig eine qualitativ hochwertige elektrische Verbindung vorliegt. Etwaige Reste von Schutzbeschichtungen, die im Bereich des Gewindes gefangen werden, sorgen für eine Abdichtung des Gewindes und tragen auch langfristig zum Korrosionsschutz bei. Es besteht keine Notwendigkeit die Schutzbeschichtung von der Stirnseite des Befestigungselements vor Anbringung der elektrischen Anschlusseinrichtung wegzukratzen oder anderweitig zu entfernen. Die elektrische Anschlusseinrichtung sitzt auf ihrer einen Seite auf dieser Schutzbeschichtung an der Stirnseite des Befestigungselements auf, der Kopf der Schraube bildet aber eine qualitativ hochwertige elektrische Verbindung zur elektrischen Anschlusseinrichtung. Dadurch, dass die elektrische Anschlusseinrichtung verdrehsicher am Befestigungselement gehalten ist, entsteht zwischen dem Kopf der Schraube und der elektrischen Anschlusseinrichtung während des Festziehens der Schraube ein gewisser Schlupf, der an dieser Stelle für frische metallische Oberflächen sorgt, so dass auch hier eine hochwertige elektrische Verbindung entsteht.

Die elektrisch leitfähige Verbindung führt also von der elektrischen Anschlusseinrichtung über die Schraube in das Befestigungselement im Bereich des Gewindes hinein und vom metallischen Befestigungselement über die Verdrehsicherungsmerkmale und Oberflächenbereiche im Bereich des Stanzloches im Blechteil in das Blechteil hinein. Das Blechteil wird üblicherweise dann in eine Karosserie oder in ein Gehäuse eingebaut, die als Masse bezeichnet werden können.

Dadurch, dass eine Gewinde formende oder schneidende Schraube zur Anwendung gelangt und die Bohrung des hohlen Befestigungselements wenigstens zum Teil mit Schutzbeschichtung belegt sein kann, entsteht bei der Anbringung der Schraube eine erhebliche Reibung zwischen Schraube und Befestigungselement, so dass erhebliche Drehmomente auf das Befestigungselement ausgeübt werden. Die Verdrehsicherung zwischen dem Befestigungselement und dem Blechteil muss daher so ausgelegt werden, dass sie solche Drehkräfte aushalten kann. Auch führt die Anbringung der entsprechenden Drehkräfte über das verwendete Werkzeug häufig zu einem ausgeprägten Ausknüpfmoment am Element selbst, so dass die Verbindung zwischen dem Befestigungselement und dem Blechteil gegen solche Ausknüpfmomente sicher sein soll, d.h. es soll ein erheblicher Ausknüpfwiderstand vorliegen.

Dieser Forderung wird ein Befestigungselement gerecht, das sich dadurch auszeichnet, dass daß ein rohrförmiger Führungsabschnitt konzentrisch zum rohrförmigen Nietabschnitt und radial innerhalb diesem angeordnet ist, wobei zwischen dem Führungsabschnitt und dem Nietabschnitt ein Ringspalt vorgesehen ist und der Führungsabschnitt über das freie Ende des Nietabschnittes hinausragt.

Dadurch, daß ein rohrförmiger Führungsabschnitt konzentrisch zum rohrförmigen Nietabschnitt und radial innerhalb diesem angeordnet ist, wobei der Führungsabschnitt über das zweite Ende des Nietabschnittes hinausragt, wird erfindungsgemäß bei der Anwendung des Befestigungselement mit einem vorgelochten Blech dafür gesorgt, daß sich der Führungsabschnitt in das Loch des vorgelochten Blechs hineinbewegt und gegebenenfalls unter Ausweitung des Loches für eine Zentrierung des Befestigungselementes gegenüber dem vorgefertigten Loch bzw. aufgeweiteten vorbereiteten Loch sorgt. Da der Führungsvorgang vor der anschließenden Aufweitung des Loches durch den Nietabschnitt und der anschließenden Umbördelung des Nietabschnittes stattfindet, wird auch sichergestellt, daß stets eine hochwertige mechanische und elektrische Verbindung zwischen dem Befestigungselement und dem Blechteil zustande kommt.

Sollte eine Vorlochung des Blechteils vorgesehen werden, was grundsätzlich möglich, jedoch nicht bevorzugt ist, kann diese Vorlochung auch so vorgenommen werden, daß auf der Seite des Bleches, von der das Befestigungselement eingeführt wird, keine vorstehende Ringlippe vorliegt, was ebenfalls die Ausrichtung des Befestigungselementes mit dem Blechteil erleichtert.

Besonders günstig bei der vorliegenden Erfindung ist es, daß der Führungsabschnitt des Befestigungselementes als Stanzabschnitt ausgebildet werden kann, wodurch das Befestigungselement selbststanzend in das Blechteil eingebracht werden kann, so daß eine Vorlochung überhaupt nicht notwendig ist und die Forderungen an die Ausrichtung des Befestigungselementes mit dem Blechteil noch geringer werden. Durch die selbstanzende Ausbildung des Befestigungselementes wird auch eine preisgünstige Herstellung des Zusammenbauteils erreicht, da die Operation der Vorlochung des Blechteils entfällt. Hierdurch wird auch das Verfahren zur Anbringung des Befestigungselementes an das Blechteil vereinfacht.

An dieser Stelle soll kurz auf die DE-C-3446978 und die DE-C-3447006 hingewiesen werden. Die DE-C-3446978 beschreibt unter anderem ein Mutterelement, das selbststanzend in ein Blechteil eingebracht wird, während die DE-C-3447006 ein ähnlich konzipiertes Bolzenelement offenbart. Weder das Mutterelement noch das Bolzenelement gemäß den oben genannten deutschen Patenten hat einen Führungsabschnitt zusätzlich zum Nietabschnitt, so daß der Nietabschnitt sowohl die Stanzfunktion als auch die Nietfunktion ausüben muß, was schließlich komplizierter ist und strengere Anforderungen an den Nietabschnitt und an die verwendete Matrize stellt, als bei der oben bezeichneten Anordnung mit getrennten Niet- und Stanzabschnitten der Fall ist. Dennoch kann ein Befestigungselement mit einem Stanz- und Nietabschnitt zum Zwecke der vorliegenden Erfindung ausgenützt werden, wie später näher erläutert wird.

Besonders bevorzugt ist es, wenn das freie Ende der Wandung des ringförmigen Nietabschnitts, in einer axialen Schnittebene gesehen, sowohl auf der radial äußeren Seite als auch auf der radial inneren Seite gerundet ist und beispielsweise eine halbkreisförmige oder pfeilspitzartige Form aufweist.

Wie bereits angedeutet, führt der Führungsabschnitt des Befestigungselementes beim Anbringen des Befestigungselementes an ein Blechteil zu einer konusförmigen Vertiefung im Blechteil, und zwar bei einem vorgelochten Blechteil bei der Aufweitung des Loches durch den Führungsabschnitt und bei einer selbststanzenden Ausführungsform des Befestigungselementes vor dem Heraustrennen eines Stanzbutzens durch den als Stanzabschnitt ausgebildeten Führungsabschnitt, wobei die konusförmige Vertiefung dann vom Nietabschnitt aufgeweitet wird. Die gerundete Ausbildung der äußeren Wandung des Nietabschnittes im Bereich seines freien Endes ist eine günstige Form für die weitere Aufweitung des Loches und der entsprechenden Verformung der konusförmigen Wandung der Vertiefung. Die gerundete Form auf der inneren Seite des freien Endes des Nietabschnittes hilft dagegen bei der Umbördelung des Nietabschnittes, was in einer entsprechend konkav gewölbten Ringfläche der Matrize erfolgt. Diese Form ermöglicht auch, daß der Ringspalt möglichst klein gehalten werden kann, ohne den Vorgang der Umbördelung des Nietabschnitts zu beeinträchtigen. Dadurch, daß der Ringspalt möglichst klein gehalten werden kann und sogar 0 mm betragen kann (was bedeutet, daß die innere Wandung des Nietabschnittes an dem äußeren Umfang des Führungsabschnittes anliegt), kann der Durchmesser des Befestigungselementes als Ganzes möglichst klein gehalten werden, wodurch Material gespart und Kosten gesenkt werden können.

Der Ringspalt weist vorzugsweise eine radiale Abmessung im Bereich zwischen 0 mm und etwa 3 mm.

Der Ringspalt geht vorzugsweise in einem axialen Abstand vor der ringförmigen Anlagefläche auf der Nietabschnittsseite der ringförmigen Auflagefläche zu Ende. Diese Ausbildung führt zu einer stabilen Anbindung des Nietabschnittes an dem Kopfteil des Elementes und begünstigt eine feste Anbringung des Befestigungselementes am Blechteil.

Wenn der Führungsabschnitt als Stanzabschnitt ausgebildet ist, weist er vorzugsweise eine ringförmige Schneidkante an seinem der Anlagefläche abgewandten Stirnende auf und diese Schneidkante wirkt mit einer entsprechend geformten Schneidkante einer mittleren Bohrung einer Matrize zusammen, um einen sauberen Stanzbutzen aus dem Blechteil bei der Anbringung des Befestigungselementes am Blechteil herauszustanzen.

Besonders bevorzugt ist es, wenn Verdrehsicherungsmerkmale im Bereich der ringförmigen Auflagefläche und/oder am Nietabschnitt und/oder an der Mantelfläche des Kopfteils benachbart zur Auflagefläche angeordnet sind. Wenn die Verdrehsicherungsmerkmale im Bereich der Mantelfläche des Kopfteils vorgesehen sind, so können diese durch eine polygonale oder genutete Form der Mantelfläche erzeugt werden. Die Verdrehsicherungsmerkmale im Bereich der ringförmigen Auflagefläche und/oder am Nietabschnitt und gegebenenfalls an der Mantelfläche können durch Nasen oder durch rillenförmige Vertiefungen gebildet sein.

Wenn Verdrehsicherungsnasen vorgesehen sind, können diese erhaben an der Auflagefläche und am Nietabschnitt im Bereich des Überganges von der Auflagefläche in den Nietabschnitt vorliegen.

Die Aufnahme für die elektrische Anschlusseinrichtung ist vorzugsweise durch mindestens einen über die Stirnseite des Befestigungselements hinausragenden Vorsprung gebildet. Hier reicht ein beispielsweise als Lappen ausgebildeter Vorsprung, um eine Verdrehung der elektrischen Anschlusseinrichtung, beispielsweise in Form eines Kabelschuhs, zu verhindern, da bei anfänglicher Verdrehung des Kabelschuhs der Anschlussbereich für das Kabel dann in Anlage gegen eine Flanke des Vorsprungs bzw. des Lappens gerät und eine weitere Verdrehung der elektrischen Anschlusseinrichtung verhindert. Noch günstiger ist es, wenn das Befestigungselement mit zwei Vorsprüngen ausgeführt wird, die durch zwei voneinander einen Abstand aufweisende Lappen gebildet sind, die seitlich der Bohrung des hohlen Befestigungselements angeordnet sind. Der Bereich des Kabelschuhs, der die Kabel aufnimmt, kann dann zwischen den zwei Lappen positioniert werden und die relative Verdrehung zwischen dem Kabelschuh und dem Befestigungselement auf ein Minimum begrenzt werden, die durch den Abstand zwischen den beiden Lappen bestimmt ist. Andererseits werden durch die zwei Lappen zwei offene Bereiche geschaffen, in die der Kabelanschlussbereich des Kabelschuhs wahlweise angeordnet werden kann. Selbstverständlich können mehrere Vorsprünge vorgesehen werden, wodurch mehrere offene Bereiche zwischen jeweils zwei Lappen geschaffen werden, so dass mehrere mögliche Orientierungen eines Kabelschuhs vorliegen.

Der Vorsprung kann sich um die Bohrung des Befestigungselements herum erstrecken und im Außenumriss polygonal ausgeführt werden. Beispielsweise kommen Außenumrisse in dreieckiger, quadratischer, hexagonaler oder achteckiger Form in Frage, wobei die achteckige Form besonders bevorzugt wird, da sie mehrere mögliche Orientierungen eines entsprechend ausgebildeten Kabelschuhs zulässt.

Weitere bevorzugte Ausführungsformen des erfindungsgemäßen Verfahrens des Befestigungselements

Befestigungselement sowie des Zusammenbauteils ergeben sich aus den beigefügten Unteransprüchen sowie der weiteren Beschreibung von Ausführungsbeispielen.

Die Erfindung wird nachfolgend näher erläutert anhand von Ausführungsbeispielen unter Bezugnahme auf der Zeichnungen, welche zeigen:
- Fig. 1: eine Seitenansicht eines hohlen Befestigungselements,
- Fig. 2: eine Draufsicht auf das obere Stirnenede des Befestigungselements der Fig. 1,
- Fig. 3: eine perspektivische Darstellung des Befestigungselements der Figuren 1 und 2,
- Fig. 4: eine teilweise in Längsrichtung geschnittene Darstellung des Befestigungselements der Figuren 1 bis 3 im Ausgangsstadium der Anbringung des Befestigungselements an ein Blechteil unter Anwendung einer Matrize,
- Fig. 5: eine Darstellung ähnlich der Fig. 4, jedoch zu einer späteren Phase der Anbringung des Befestigungselements am Blechteil,
- Fig. 6: eine Darstellung ähnlich der Fig. 5, jedoch in einem noch späteren Stadium der Anbringung des Befestigungselementes an ein Blechteil,
- Fig. 7: eine Darstellung ähnlich der Fig. 6 nach Fertigstellung der Anbringung des Befestigungselementes am Blechteil und
- Fig. 8: das Zusammenbauteil der Fig. 7 nach der Entfernung aus dem Werkzeug zur Herstellung des Zusammenbauteils.
- Fig. 9: eine alternative Ausführung eines Befestigungselements ähnlich dem Befestigungselement der Fig. 1-8, jedoch mit einer anderen Aufnahme für die elektrische Anschlusseinrichtung, wobei die Fig. 9 das Element teils in Seitenansicht, teils in einem Längsschnitt zeigt,
- Fig. 10: eine Draufsicht auf die Unterseite des Befestigungselements der Fig. 9,
- Fig. 11: eine perspektivische Darstellung des Befestigungselements der Fig. 9 und 10,
- Fig. 12: eine Seitenansicht des Befestigungselements der Fig. 9, 10 und 11,
- Fig. 13: das Detail Z in Fig. 9,
- Fig. 14: das Befestigungselement der Fig. 9 an einem Blechteil angebracht,
- Fig. 15: das Zusammenbauteil der Fig. 14 mit einer elektrischen Anschlusseinrichtung, die über eine Schraube an das Befestigungselement befestigt ist,
- Fig. 16: eine Draufsicht auf die elektrische Anschlusseinrichtung der Fig. 15 vor der Anbringung am Befestigungselement der Fig. 15,
- Fig. 17: eine Darstellung eines weiteren Befestigungselements teilweise in Seitenansicht und teilweise in einer längs geschnittenen Ansicht,
- Fig. 18: eine Draufsicht auf die Oberseite des Befestigungselements der Fig. 17 und
- Fig. 19: das Befestigungselement der Fig. 17 und 18 nach der Anbringung an ein Blechteil.

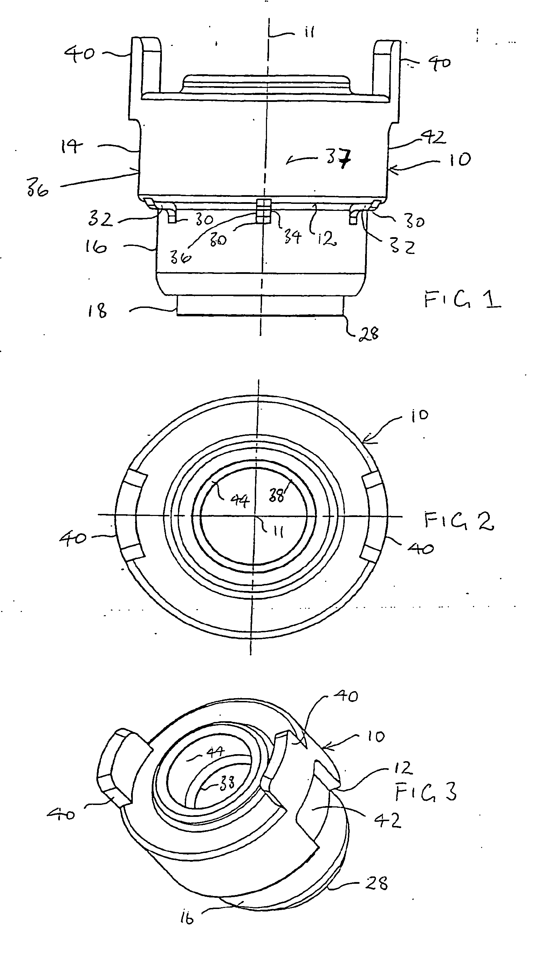

Bezug nehmend auf die Figuren 1 bis 4 ist das dort gezeigte Befestigungselement 10 mit einem eine ringförmige Auflagefläche 12 aufweisenden Kopfteil 14 und einem rohrförmigen auf der Seite der Auflagefläche 12 des Kopfteils 14 vorgesehenen vom Kopfteil 14 weg erstreckenden Nietabschnitt 16 versehen. Das Befestigungselement weist eine mittlere Längsachse 11 auf.

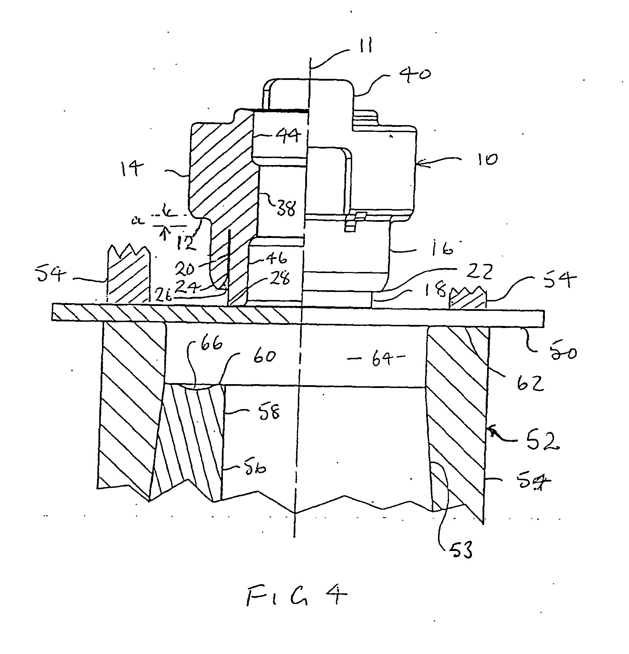

Ein rohrförmiger Führungsabschnitt 18 ist konzentrisch zum rohrförmigen Nietabschnitt 16 und radial innerhalb diesem angeordnet, wobei zwischen dem Führungsabschnitt 18 und dem Nietabschnitt 16 ein Ringspalt 20 vorgesehen ist, der nur aus Fig. 4 ersichtlich ist.

Wie ebenfalls aus Fig. 4 ersichtlich, ist das freie Ende 22 der Wandung des ringförmigen Nietabschnittes 16 in der axialen Schnittebene der Fig. 4 gesehen sowohl auf der radial äußeren Seite 24 als auch auf der radial inneren Seite 26 gerundet und hat hier eine gerundete pfeilspitzartige Form. Die Spitze der pfeilspitzartigen Form könnte aber ebenfalls gerundet sein, wodurch sich eine halbkreisförmige Form ergeben würde, die aber nicht gezeigt ist.

In der Darstellung der Fig. 4 weist der Ringspalt eine radiale Abmessung von 0 mm auf, d.h. der Nietabschnitt liegt am Führungsabschnitt 18 an, ist aber erst mit dem Führungsabschnitt 18 dort verbunden, wo der Ringspalt 20 in einem kurzem axialen Abstand "a" vor der ringförmigen Auflagefläche 12 zu Ende geht.

Das Befestigungselement der Figuren 1 bis 4 wird üblicherweise durch ein Kaltschlagverfahren hergestellt, dessen Grundzüge an sich gut bekannt sind. Zur Herstellung des eng am Führungsabschnitt anliegenden Nietabschnittes kann es notwendig sein, den Nietabschnitt erst mit einem gewissen radialen Abstand vom Führungsabschnitt durch Kaltschlagen herzustellen und anschließend in einer weiteren Phase des Kaltschlagverfahrens den Nietabschnitt an den Führungsabschnitt anzudrücken oder den Führungsabschnitt bis zur Anlage an den Nietabschnitt aufzuweiten oder die Verkleinerung des radialen Abstandes durch eine Kombination der beiden Maßnahmen zu erreichen. Günstig ist es, wenn der Ringspalt 20 einen möglichst geringen radialen Breite aufweist, da dies zu einer kompakten Ausbildung des Befestigungselementes führt und Material spart.

Der Führungsabschnitt 18 ist hier als Stanzabschnitt ausgebildet und weist eine ringförmige Schneidkante 28 an seinem der Auflagefläche 12 abgewandten Stirnende, d.h. an seinem freien Ende auf.

Die Figuren 1 bis 4 zeigen weiterhin Verdrehsicherungsmerkmale 30 im Bereich der ringförmigen Auflagefläche 12 und am Nietabschnitt 16 auf, wobei die Verdrehsicherungsmerkmale hier durch Nasen gebildet sind, die erhaben an der Auflagefläche 12 und am Nietabschnitt 16 im Bereich des Überganges von der Auflagefläche in den Nietabschnitt 16 vorliegen. Die hier gezeigten Verdrehsicherungsnasen sind mit Seitenflanken 32 versehen, die in in Längsrichtung des Elementes sich erstreckenden Ebenen liegen. Die in Fig. 1 und 4 bei 34 und 36 scharfkantig ausgebildeten Verdrehsicherungsnasen können hier stattdessen mit gerundeten Kanten versehen werden. Die Verdrehsicherungsnasen könnten auch durch Vertiefungen in der Auflagefläche bzw. im Nietabschnitt realisiert werden. Auch bestünde die Möglichkeit der Mantelfläche 37 des Kopfteils 14 eine polygonale oder genutete Form zu geben. Das hohle Befestigungselement weist eine glatte Zylinderbohrung auf, die koaxial zur Längsachse 11 des Befestigungselements angeordnet ist und in diesem Beispiel teilweise im Führungsabschnitt 18 vorliegt.

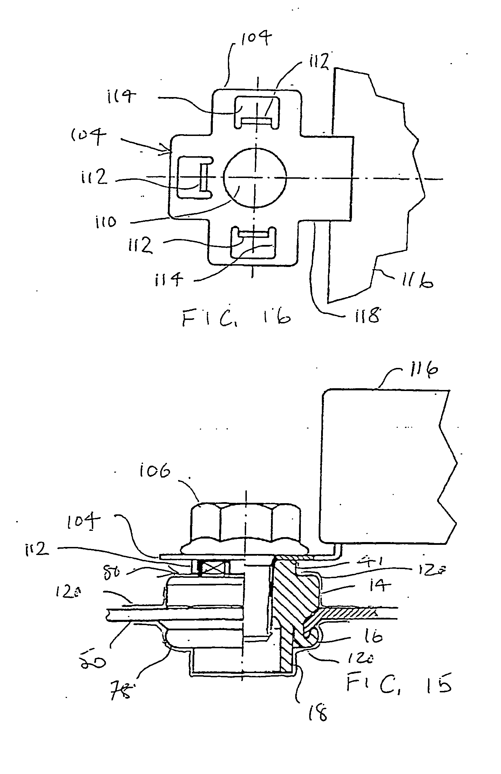

Der Durchmesser der glatten Zylinderbohrung ist so bemessen, dass durch das Eindrehen einer Gewinde schneidenden oder Gewinde formenden Schraube, wie beispielsweise anhand der Fig. 15 näher erläutert wird, ein Gewinde der gewünschten Größe entsteht. Für ein M8-Gewinde wird beispielsweise der Durchmesser mit 7,55 für eine Gewinde formende Schraube gewählt. Für Gewinde schneidende Schrauben können ebenfalls die üblicherweise vorgegebenen Abmessungen gewählt werden.

Eine weitere Besonderheit des hohlen Befestigungselements der Figuren 1 bis 4 ist in den zwei Lappen 40 zu sehen, die von der oberen Stirnseite des Elementes 10 hinausragen und dadurch erzeugt werden, daß beim Kaltschlagverfahren Material aus den Bereichen 42 nach oben geschoben wird, so daß an den Stellen 42 entsprechende Vertiefungen entstehen, wobei die Bezeichnung "nach oben" lediglich im Hinblick auf die Darstellung gemäß Fig. 1 zu verstehen ist und wie andere Ortsangaben in dieser Anmeldung nur bezogen auf die Figuren verwendet wird und keine räumliche Beschränkung des Erfindungsgegenstandes darstellt. Die Lappen 40 sorgen dafür, daß ein Kabelschuh auf das Befestigungselement mittels einer von oben eingesetzten Schraube befestigt werden kann, ohne daß der Kabelschuh mit der Schraube bei der Anbringung der Schraube gedreht wird, da eine Mitdrehung des Kabelschuhs durch die Lappen 40 verhindert wird.

Der eine elektrische Anschlusseinrichtung darstellende Kabelschuh kann eine als Öse vorgesehene Anschlussfläche, die eine kreisförmige Ausnehmung zur Aufnahme der erwähnten Schraube aufweist oder eine ebenfalls bekannte U-förmige Ausnehmung aufweisen, die durch zwei Anschlussschenkel begrenzt sind. In beiden Fällen ist ein von der Anschlussfläche sich seitlich wegerstreckender Anschlussbereich vorgesehen, der ein Kabel hält, das üblicherweise über eine Quetschverbindung mit diesem Anschlussbereich Strom leitend befestigt ist. Die genaue Ausbildung der elektrischen Anschlusseinrichtung ist aber nicht auf solche Ausführungen beschränkt und kann im Prinzip eine beliebige Form aufweisen, einschließlich die Form von Blechteilen, beispielsweise solche, die aus einem Gehäuse eines elektrischen Gerätes herausragen, wie beispielhaft in Fig. 15 und 16 gezeigt. Es soll lediglich die Form der Aufnahme am Befestigungselement mit der Form der elektrischen Anschlusseinrichtung dadurch kompatibel sein, dass die erwünschte Verdrehsicherung erreicht wird.

Wie insbesondere aus der Fig. 4 ersichtlich, weist das Befestigungselement 10 zylindrische Freiräume bzw. Aussparungen 44 und 46 oberhalb und unterhalb der glatten Zylinderbohrung 38 auf, wobei diese Freiräume einen Durchmesser aufweisen, der üblicherweise geringfügig größer bemessen wird als der Außendurchmesser einer Schraube, die in die Zylinderbohrung 38 eingeschraubt wird.

Obwohl die Zylinderbohrung 38 hier teilweise im Kopfteil 14 und teilweise im Führungsabschnitt 18 des Befestigungselements 10 angeordnet ist, könnte er auch vollständig im Kopfteil oder vollständig im Führungsabschnitt angeordnet werden.

Die Fig. 4 zeigt das Befestigungselement 10 in einem ersten Stadium der Anbringung an ein Blechteil 50, wobei in der Darstellung der Fig. 4 das Blechteil 50 auf einer Matrize 52 abgestützt wird und gegen die Matrize 52 mittels eines ringförmigen Niederhalters 54 gedrückt wird, wobei der Niederhalter 54 vorzugsweise, aber nicht zwangsläufig vorgesehen sein muß.

Die Darstellung gemäß Fig. 4 geht davon aus, daß die Anbringung des Befestigungselements 10 an das Blechteil 50 in einer Presse erfolgt, wobei die Matrize 52 im unteren Werkzeug der Presse angeordnet ist (nicht gezeigt) und das Befestigungselement 10 mittels eines ebenfalls nicht gezeigten Setzkopfes auf das Blechteil 50 gedrückt wird, wobei der Setzkopf an einer Zwischenplatte der Presse oder an einem oberen Werkzeug der Presse angebracht sein kann. Solche Setzköpfe und Niederhalter 54 sind im Stand der Technik bestens bekannt und werden hier daher nicht extra beschrieben. Es sollte aber zum Ausdruck gebracht werden, daß auch andere Anordnungen innerhalb einer Presse möglich sind. Beispielsweise kann die Matrize 52 in einer Zwischenplatte der Presse angeordnet sein, wobei der Setzkopf mit oder ohne Niederhalter dann am oberen Werkzeug der Presse angebracht wird. Auch ist es möglich, die Matrize 52 am oberen Werkzeug der Presse vorzusehen und den Setzkopf mit oder ohne Niederhalter dann auf einer Zwischenplatte der Presse oder auf dem unteren Werkzeug der Presse zu montieren, d.h. das Befestigungselement 10 in umgekehrter Richtung unterhalb des Blechteils 50 anzubringen.

Auch ist es durchaus möglich, das Befestigungselement 10 von einem Roboter oder unter Anwendung eines an sich bekannten C-Gestells mit Druckzylinder an das Blechteil 50 anzubringen, wobei der Roboter oder ein Hilfsroboter dann die Matrize 52 unterhalb des Blechteils hält und für die Anbringung der erforderlichen Presskraft auf das Befestigungselement 10 sorgt.

In Fig. 4 ist eine zweiteilige Ausbildung der Matrize 52 gezeigt. Diese besteht aus einem äußeren ringförmigen Matrizenteil 54 und einem inneren, ebenfalls ringförmigen Matrizenteil 56 mit einer mittleren Längsbohrung 58, wobei in diesem Beispiel der innere Matrizenteil 56 eine leicht konusförmig verlaufende äußere Wand aufweist, die mit einer entsprechend geformten konusförmig verlaufenden inneren Wand 53 des äußeren Matrizenteils 54 zusammenarbeitet, so daß das obere Stirnende 60 des inneren Matrizenteils 56 unterhalb der oberen Stirnseite 62 des äußeren Matrizenteils 54 zu liegen kommt und hierdurch eine Vertiefung 64 bildet. Das obere Stirnende 60 des inneren Matrizenteils 56 bildet somit die Bodenfläche der Vertiefung 64 und weist im übrigen eine ringförmige konkav gewölbte Fläche 66 auf. Die mittlere Bohrung 58 des mittleren Matrizenteils 56 weist einen Durchmesser auf, der geringfügig größer ist als der Außendurchmesser des Führungsabschnittes 18. Die Vertiefung 64 weist einen Durchmesser auf, der etwas größer ist als der Außendurchmesser des Kopfteils 14 des Befestigungselementes 10 zuzüglich der doppelten Stärke des Blechteils 50.

Sowohl das innere Matrizenteil 56 als auch dessen Bohrung 58, und auch das äußere Matrizenteil 54 und die zwischen den beiden Matrizenteilen definierte Vertiefung 64, sind koaxial zur mittleren Längsachse 11 des Befestigungselementes 10 angeordnet. Die Matrize 52 könnte auch einteilig ausgeführt werden.

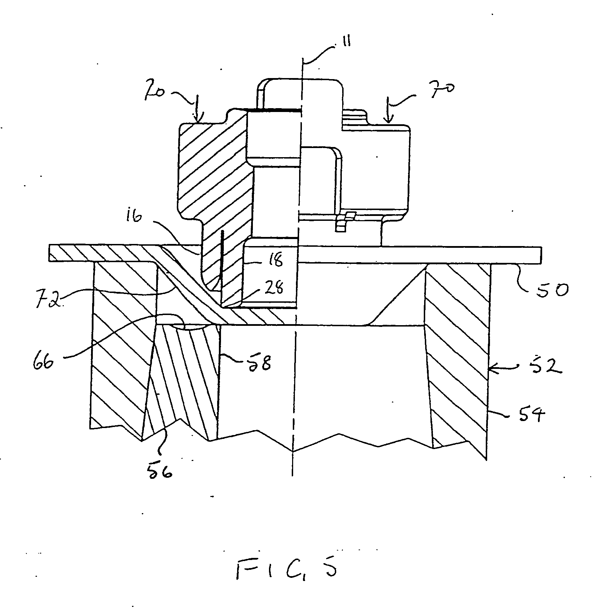

Ausgehend von dem Stadium der Fig. 4 wird nunmehr entsprechend der Fig. 5, durch die Anbringung einer Kraft in Pfeilrichtung 70 auf die obere Stirnseite des Befestigungselementes 10 mittels des Setzkopfes z.B. in der Presse oder unter Anwendung eines Roboters und bei gleichzeitiger Abstützung der Matrize, das Befestigungselement 10 gegen das Blechteil 50 gedrückt, wobei in Fig. 5 der wahlweise vorgesehene Niederhalter 54 der Darstellung halber weggelassen ist.

Man sieht, daß der Führungsabschnitt das Blechteil gegen das obere Stirnende 60 des inneren Matrizenteils 56 gedrückt und das Blech zu einer konusförmig verlaufenden Vertiefung 72 gezogen hat. In diesem Stadium hat die ringförmige Schneidkante 28 des als Stanzabschnitt 18 ausgebildeten Führungsabschnittes noch nicht angefangen das Blechteil 50 durchzuschneiden und das freie untere Stirnende 22 des Nietabschnitts 16 hat das Blechteil 50 noch nicht berührt.

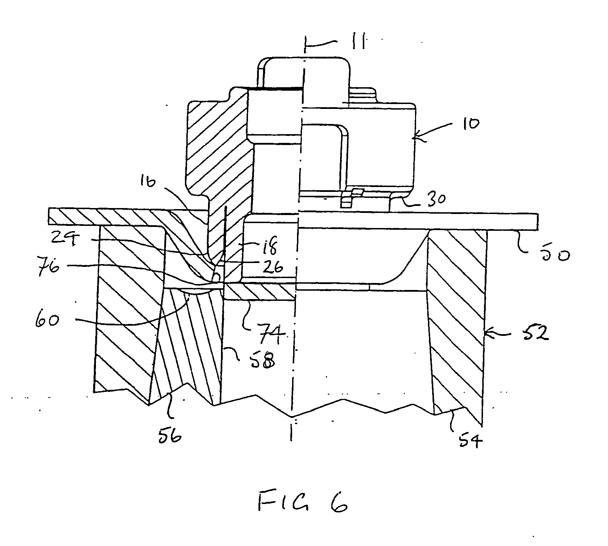

Im weiteren Stadium der Fig. 6 hat der Führungsabschnitt 18 einen Stanzbutzen 74 aus dem Boden der konusförmigen Vertiefung des Blechteils herausgetrennt und diesen teilweise durch die mittlere Bohrung 58 der Matrize gedrückt, wobei diese mittlere Bohrung 58 auch leicht nach unten divergierend ausgebildet sein kann, damit der Stanzbutzen über dieser mittleren Längsbohrung durch Schwerkraft, gegebenenfalls mit pneumatischer Unterstützung, entsorgt werden kann.

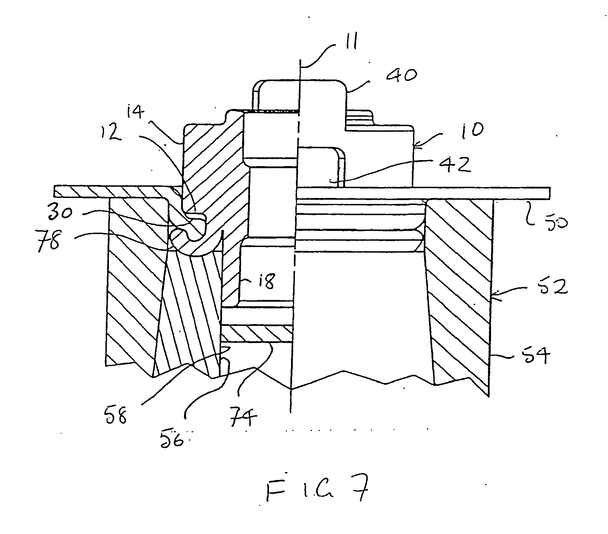

Nach dem Heraustrennen des Stanzbutzens hat auch die gerundete Außenwand 64 am freien Ende des Nietabschnitts 16 die Wandung der konusförmigen Vertiefung des Blechteils 50 von der mittleren Längsachse 11 weggedrückt, d.h. die Wandung in eine etwas steilere Position gebracht und das Loch 76, das durch Heraustrennen des Stanzbutzens 74 entstanden ist, so weit aufgeweitet, daß das freie Ende des Nietabschnitts 16 nunmehr durch das Loch 76 durchgedrückt werden kann, so daß die innere gekrümmte Wandung 26 des freien Endes des Nietabschnitts in Berührung mit der ringförmigen Vertiefung 66 gelangen kann, wodurch bei einer weiteren nach unten gerichteten Bewegung des Befestigungselementes aufgrund des Druckes in Pfeilrichtung 70 der rohrförmige Nietabschnitts 16 zu einem Nietbördel 78 gemäß Fig. 7 umgebördelt wird. Durch diesen Umbördelungsvorgang wird das Blechteil 50 im Bereich der bisherigen konusförmigen Vertiefung so verformt, daß sie formschlüssig zwischen der ringförmigen Auflagefläche 12 und dem umgebördelten Nietabschnitt geklemmt wird. Gleichzeitig werden die Verdrehsicherungsnasen 30 in das Blechmaterial hineingedrückt, so daß auch eine Verdrehsicherung entsteht. Wenn die Verdrehsicherungsmerkmale durch entsprechende Vertiefungen gebildet sind, so wird das Blechmaterial in solche Vertiefungen hineingedrückt, wodurch ebenfalls eine Verdrehsicherung entsteht.

Das Blechmaterial wird aber gleichzeitig teilweise in die Vertiefungen 42 hineingedrückt, die durch die Ausbildung der Lappen 40 entstanden sind, so daß auch in diesem Bereich eine Verdrehsicherung entsteht. Sollte das Kopfteil 14 des Befestigungselementes 10 eine polygonale oder genutete oder gerippte Form aufweisen, so wird auch in diesem Bereich ein entsprechender Formschluß zwischen dem Blechteil und dem Befestigungselement erzeugt.

Man sieht aus Fig. 7, daß der Führungsabschnitt 18 während der Anbringung des Befestigungselements 10 immer tiefer in die mittlere Bohrung 58 des inneren Matrizenteils 56 hineinreicht, wodurch eine sichere Führung des Befestigungselements erreicht wird.

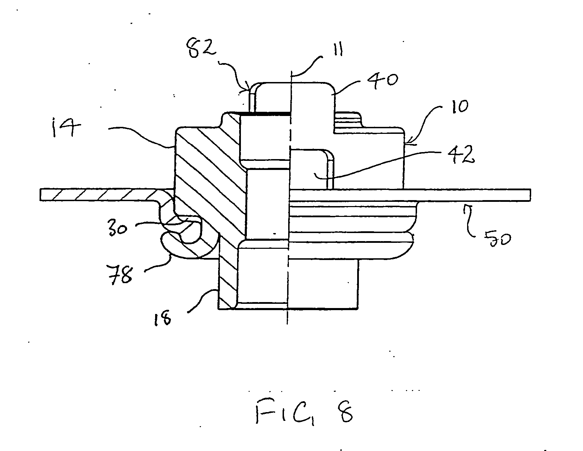

Das fertiggestellte Zusammenbauteil, bestehend aus dem Befestigungselement 10 und dem Blechteil 50, ist dann in Fig. 8 dargestellt, nach der Entfernung aus dem Anbringungswerkzeug, d. h. aus der Presse oder aus dem Roboter oder andersartig konzipierten Anbringungswerkzeugen.

Man sieht, daß der Führungsabschnitt deutlich über den ungebördelten Nietabschnitt 16 hinausragt. Es ist im übrigen auch möglich, die Anordnung so zu dimensionieren, daß das Körperteil 14 noch weiter innerhalb der Vertiefung im Blechteil oder sogar vollständig innerhalb dieser Vertiefung untergebracht ist. In dem fertiggestellten Zustand gemäß Fig. 8 kann das Zusammenbauteil insgesamt mit einer Schutzbeschichtung versehen werden und eine elektrische Anschlusseinrichtung, beispielsweise ein Kabelschuh, kann anschließend auf der oberen Stirnseite des Befestigungselements oder auf der unteren Stirnseite der Fig. 8 befestigt werden, d.h. die entsprechende Gewinde schneidende oder Gewinde formende Schraube kann von oben kommend in die Zylinderbohrung bei gleichzeitiger Ausbildung des Gewindezylinders eingebracht werden. Die Lappen 40, die hier vorgesehen sind, ermöglichen es, dass das Element als elektrisches Anschlusselement verwendet werden kann, beispielsweise als Masseanschlusselement bei einer Fahrzeugkarosserie.

Das Befestigungselement 10 gemäß der vorliegenden Erfindung hat den besonderen Vorteil, daß es auch mit Schutzschichten oder Lackschichten versehenen Blechteilen 50 verwendet werden kann und dennoch eine ausgezeichnete elektrische Verbindung erzeugt, und zwar im Bereich des Stanzloches und der Verdrehsicherungsnasen die gerade bei einer scharfkantigen Ausbildung der Verdrehsicherungsnasen die Schutzbeschichtung lokal durchschneiden und für eine metallische Verbindung zum Blechteil 50 sorgen. Darüberhinaus wird die Schutzschicht an Stellen beschädigt, die innerhalb des Formschlusses zwischen dem Blechteil 50 und dem Befestigungselement liegen, so daß dort eine Abdichtung vorliegt und Korrosion verhindert wird. Der Formschluß zwischen dem Blechteil und dem Befestigungselement ist so intensiv, daß die Verbindung eine abgedichtete Verbindung, darstellt, die, wenn es auf eine besondere Abdichtung ankommt auch durch Anbringung eines Klebstoffs auf das Element oder das Blechteil unterstützt werden kann. Durch die Vertiefung im Blechteil 50 im Bereich des Befestigungselementes wird eine ausgezeichnete Verbindung mit dem Blechteil sichergestellt, so daß ein hoher Widerstand gegen Auszugskräfte in beide Richtungen und ein hoher Ausknüpfwiderstand erzeugt wird und außerdem ein hoher Widerstand gegen Scherkräfte und Torsionskräfte vorliegt. Außerdem kann das Element bei wechselnden dynamischen Belastungen verwendet werden und Ermüdungserscheinungen bei dynamischen Belastungen sind nicht zu befürchten.

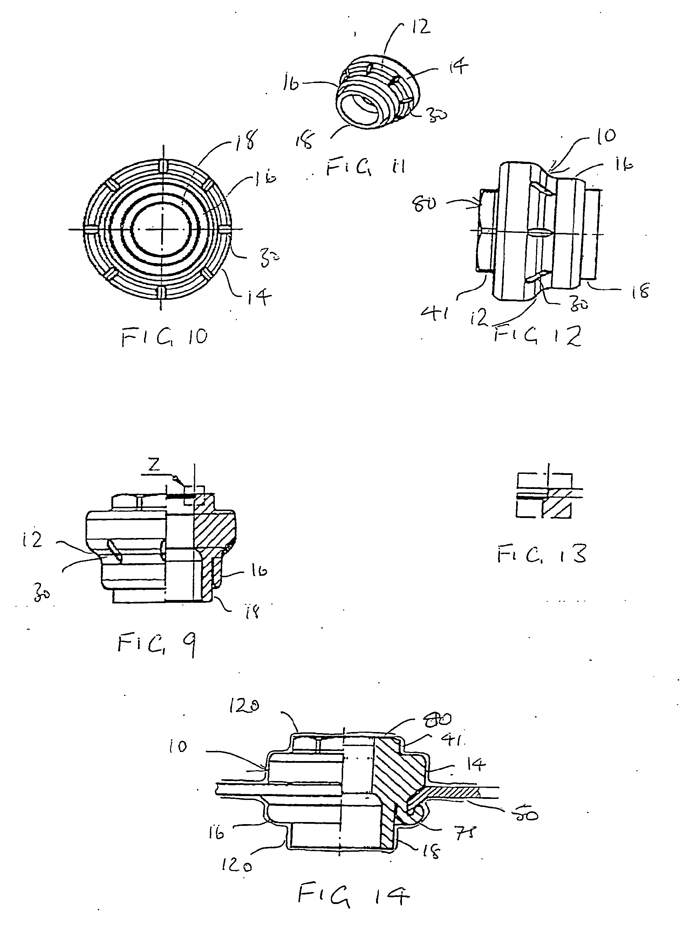

Die Figuren 9 bis 15 befassen sich mit einer erfindungsgemäßen Ausführung eines Befestigungselements 10, das dem Befestigungselement der Fig. 1 bis 8 sehr ähnlich ist. Es liegen im wesentlichen nur zwei Unterschiede vor, die etwas später näher beschrieben werden. Für die Ausführungsform der Fig. 9 bis 15 sowie der weiteren Figuren werden die gleichen Bezugszeichen verwendet wie für die erste Ausführungsform gemäß Fig. 1 bis 8 und es versteht sich, dass Teile bzw. Merkmale, die das gleiche Bezugszeichen aufweisen, die gleiche Funktion haben wie bei der ersten Ausführungsform. Insofern gilt auch die bisherige Beschreibung für die nachfolgenden Beispiele, es sei denn, es wird etwas Gegenteiliges gesagt.

Wie erwähnt, sind bei der Ausführungsform des Befestigungselements gemäß Fig. 9 bis 15 hauptsächlich zwei Unterschiede zu der bisherigen Ausführung gemäß den Figuren 1 bis 8 festzustellen. Es handelt sich hier einmal um die ringförmige Anlagefläche 12, die in diesem Beispiel konusförmig angeordnet ist und einen eingeschlossenen Konuswinkel von 90° an der mittleren Längsachse 11 des Befestigungselements bildet. Die Verdrehsicherungsmerkmale befinden sich in diesem Beispiel ausschließlich im Bereich der ringförmigen Anlagefläche 12. Das Befestigungselement 10 der Ausführung gemäß Fig. 9 bis 15 wird genauso an einem Blechteil angebracht wie bei der ersten Ausführungsform, nur ist die Matrize leicht modifiziert, um die konusförmige Auflagefläche zu berücksichtigen. Weitere Angaben zu den Vorteilen und Ausbildungen des Befestigungselements mit einer konusförmigen Blechanlagefläche sind der PCT-Anmeldung PCT/EP02/04365 der vorliegenden Anmelderin zu entnehmen.

Der zweite Unterschied liegt darin, dass die Aufnahme 80 zur Aufnahme der elektrischen Anschlusseinrichtung 104 in diesem Beispiel durch einen Vorsprung 41 gebildet ist, der von der oberen Stirnseite des Befestigungselements 10, die dem Nietabschnitt 16 abgewandt ist, wegragt. Dieser Vorsprung hat eine mittlere Bohrung, die koaxial zur mittleren Bohrung 38 des hohlen Befestigungselements 10 liegt und im Durchmesser etwas größer als die Bohrung 38 ist. Im Außenumriss ist der Vorsprung in diesem Beispiel achteckig, d.h. oktogonal, und dient der Aufnahme einer elektrischen Anschlusseinrichtung 104, deren Form aus den Fig. 15 und 16 hervorgeht. Demnach ist die elektrische Anschlusseinrichtung als Blechteil ausgebildet, mit einer Ausnehmung 110 in Form eines Durchgangslochs, durch das die Schraube 106 hindurchragt und mit drei, in der Darstellung gemäß Fig. 15 nach unten ragenden Lappen 112, die jeweils an einer der Seitenflächen des im Außenumriss achteckigen Vorsprungs anliegen. Die Lappen 112, wie auch das Loch 110 und etwaige andere Formmerkmale des Blechteils 104, wie beispielsweise dessen Außenumriss, sind durch einen Stanzvorgang hergestellt, wobei die Lappen 112 jeweils aus Material geformt sind, das aus den Bereichen 114 durch den Stanzvorgang an drei Seiten freigelegt und nach unten gebogen wird. In dem Beispiel gemäß den Figuren 15 und 16 ist die elektrische Anschlusseinrichtung 104 als Anschlussklemme eines Gehäuses 116 einer elektrischen Einheit beliebiger Bauart vorgesehen. Die elektrische Anschlusseinrichtung 104 könnte aber genauso gut mit einem Kabelanschlussbereich ausgebildet werden, an dem ein oder mehrere Kabel durch eine Quetschverbindung befestigt ist bzw. sind. Beispielsweise könnte der Bereich 118 diesem Zweck dienen.

Die freiliegenden Flächen des Zusammenbauteils, bestehend aus dem Blechteil 50 dem Befestigungselement 10 der Fig. 15 einschließlich der Außenseiten und obere Stirnseite des Vorsprungs 41 sind, wie auch bei den anderen Beispielen des Zusammenbauteils, mit einer Schutzbeschichtung 120 beschichtet (nur stellenweise angedeutet und in Fig. 8 nicht eingezeichnet), dennoch ist eine hochwertige elektrische Verbindung zwischen der elektrischen Anschlusseinrichtung 104 und dem Blechteil 50 vorhanden, und zwar führt diese Verbindung von der elektrischen Anschlusseinrichtung über den Kopf der Schraube 106, das Schaftteil der Schraube 106 und das von dieser Schraube geformte oder geschnittene Gewinde in das Befestigungselement und weiter über das Befestigungselement selbst und die Verdrehsicherungsmerkmale und die Stanzflächen in das Blechteil 50 hinein. Die Schutzbeschichtung an der Oberfläche des Vorsprungs 41 verhindert also nicht, dass eine hochwertige elektrische Verbindung zustande kommt.

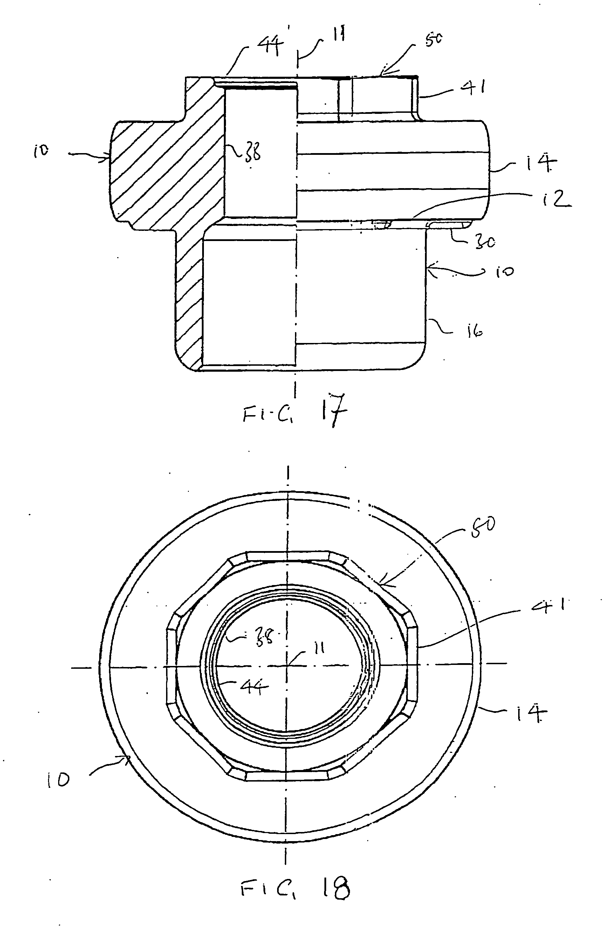

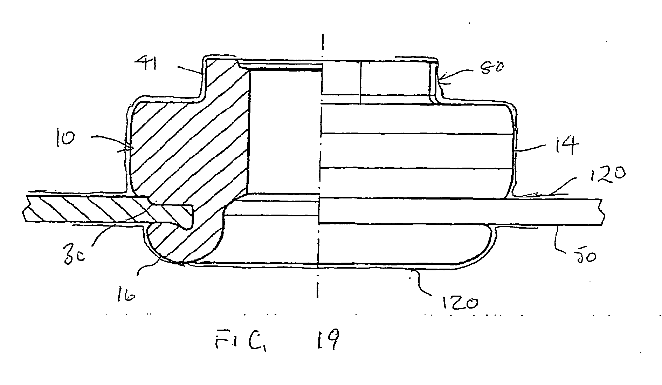

Schließlich wird auf das Befestigungselement gemäß Fig. 17 bis 19 verwiesen. Auch hier wurden, wie oben erläutert, die gleichen Bezugszeichen für die gleichen Teile verwendet.

Das Befestigungselement 10 der Fig. 17 bis 19 ist entsprechend dem europäischen Patent EP 0 539 793 ausgebildet, nur ist hier der Nietabschnitt 16 als Stanz- und Nietabschnitt ausgebildet entsprechend der Beschreibung der DE 3446978 C bzw. der DE 3447006 C.

Auf der freien Stirnseite des Befestigungselements 10 der Figuren 17 bis 19, d.h. die Stirnseite, die dem Stanz- und Nietabschnitt 16 abgewandt ist, befindet sich eine Aufnahme 80 für eine elektrische Anschlusseinrichtung, die entsprechend der Aufnahme 80 der Ausführung gemäß Fig. 9 bis 15 ausgebildet ist und daher einen im Außenumriss achteckigen Vorsprung 41 aufweist. Natürlich könnte auch das Befestigungselement 10 in diesem Beispiel auch mit zwei Lappen entsprechend den Lappen 40 der Ausführungsform gemäß Fig. 1 bis 8 versehen werden.

Die vorliegende Erfindung ist nicht beschränkt auf die Befestigungselemente, die in den Figuren gezeigt sind, sondern jedes hohle Befestigungselement, das an einem Blechteil mit einer ausreichend hohen Verdrehsicherheit und Ausknüpfsicherheit angebracht werden kann, kann durch das Vorsehen einer entsprechenden Aufnahme für eine elektrische Anschlusseinrichtung erfindungsgemäß eingesetzt werden.

Die hier beschriebenen Befestigungselemente können zum Beispiel aus allen Materialien hergestellt werden, die die Festigkeitsklasse 5.6 oder höher erreichen. Solche Metallwerkstoffe sind üblicherweise Kohlenstoffstähle mit 0,15 bis 0,55 % Kohlenstoffgehalt.

Bei allen Ausführungsformen können auch als Beispiel für den Werkstoff der Befestigungselemente alle Materialien genannt werden, die im Rahmen der Kaltverformung die Festigkeitswerte der Klasse 8 gemäß Isostandard erreichen, beispielsweise eine 35B2-Legierung gemäß DIN 1654. Die so gebildeten Befestigungselemente eigenen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für die Befestigungselemente benutzt werden, z.B. AlMg5. Auch kommen Befestigungselemente aus höherfesten Magnesiumlegierungen wie bspw. AM50 in Frage.

## Patentansprüche

1. Hohles Befestigungselement zur elektrisch leitfähigen Anbringung einer elektrischen Anschlusseinrichtung (104), wie ein Kabelschuh, an ein Blechteil (50), wobei das hohle Befestigungselement (10) einen Kopfteil (14) und einen Nietabschnitt (16) aufweist, wobei der Nietabschnitt (16) über eine konusförmige Anlagefläche (12) für das Blechteil in den Kopfteil (14) übergeht und Verdrehsicherungsmerkmale (30) an der konusförmigen Anlagefläche vorgesehen sind, wobei das Befestigungselement eine Bohrung (38) aufweist,
wobei ein rohrförmiger Führungsabschnitt (18) konzentrisch zum rohrförmigen Nietabschnitt (16) und radial innerhalb diesem angeordnet ist, wobei zwischen dem Führungsabschnitt (18) und dem Nietabschnitt (16) ein Ringspalt (20) vorgesehen ist und der Führungsabschnitt über das freie Ende des Nietabschnittes hinausragt, **dadurch gekennzeichnet**
**dass** das freie Ende der Wandung des rohrförmigen Nietabschnitts (16) in einer axialen Schnittebene gesehen sowohl auf der radial äußeren Seite (24) als auch auf der radial inneren Seite (26) gerundet ist und beispielsweise eine halbkreisförmige oder pfeilspitzartige Form aufweist,
**dass** die Verdrehsicherungsmerkmale (30) die Form von Verdrehsicherungsnasen oder -Vertiefungen aufweisen, und
**dass** die konusförmige Anlagefläche (12) ringförmig angeordnet ist und einen eingeschlossenen Konuswinkel von 90° an der mittleren Längsachse (11) des Befestigungselements bildet, und
**dass** sich die Verdrehsicherungsmerkmale ausschließlich im Bereich der konusförmigen Anlagefläche befinden.

2. Befestigungselement nach Anspruch 1,
**dadurch gekennzeichnet,**
**dass** der Ringspalt (20) eine radiale Abmessung im Bereich zwischen 0 mm und etwa 3 mm aufweist.

3. Befestigungselement nach Anspruch 1 oder 2,
**dadurch gekennzeichnet,**
**dass** der Ringspalt (20) in einem axialen Abstand (a) vor der ringförmigen Auflagefläche (12) auf der Nietabschnittsseite der ringförmigen Auflagefläche (12) zu Ende geht.

4. Befestigungselement nach einem der vorhergehenden Ansprüche,
**dadurch gekennzeichnet,**
**dass** der Führungsabschnitt (18) als Stanzabschnitt ausgebildet ist und eine ringförmige Schneidkante (28) an seinem der Auflagefläche (12) abgewandten Stirnende aufweist.

5. Befestigungselement nach einem der vorhergehenden Ansprüche,
**dadurch gekennzeichnet,**
**dass** die Bohrung (38) an einer Stelle im Befestigungselement vorgesehen ist an der ein Gewinde durch Eindrehen einer Gewindeschneidenden oder formenden Schraube (106) auszubilden ist, wobei die Stelle entweder im Kopfteil (14) oder im Führungsabschnitt (18) oder zumindest teilweise im Kopfteil (14) und im Führungsabschnitt (18) vorgesehen ist.

6. Befestigungselement nach den Anspruch 5,
**dadurch gekennzeichnet,**
**dass** der Gewindezylinder in axialer Richtung in etwa dort zu Ende geht, wo der ringförmige Spalt (20) vor der ringförmigen Auflagefläche (18) endet.

7. Zusammenbauteil bestehend aus einem Bauteil (50) und einem an diesem über eine Nietverbindung angebrachten Befestigungselement (10) nach einem der vorhergehenden Ansprüche,
**dadurch gekennzeichnet,**
**dass** das Blechteil (50) formschlüssig zwischen der konusförmigen Anlagefläche (12) und dem zu einem Nietbördel umgebördelten rohrförmigen Nietabschnitt (16) liegt und ebenfalls im Bereich der konusförmige Anlagefläche (12) eine konusförmige Gestalt aufweist.

8. Zusammenbauteil nach Anspruch 7,
**dadurch gekennzeichnet,**
**dass** die Verdrehsicherungsmerkmale als Verdrehsicherungsnasen realisiert sind, die in das Blechmaterial hineingedrückt sind.

## Claims

1. A hollow fastener element for the electrically conductive attachment of an electrical terminal device (104), such as a cable shoe, to a sheet metal part (50), wherein the hollow fastener element (10) has a head part (14) and a rivet section (16), wherein the rivet section (16) merges via a conical contact surface (12) for the sheet metal part into the head part (14) and wherein features (30) providing security against rotation are provided at the conical contact surface, wherein the hollow fastener element has a bore (38),
wherein a tubular guide section (18) is arranged concentric to the tubular rivet section (16) and radially inside the latter, with a ring gap (20) being provided between the guide section (18) and the rivet section (16) and with the guide section projecting beyond the free end of the rivet section,
**characterized in that**
the free end of the wall of the tubular rivet section (16) is rounded when viewed in an axial section plane both at the radially outer side (24) and also at the radially inner side (26) and has for example a semi-circular shape or a shape resembling an arrow-tip,
**in that** the features (30) providing security against rotation have the shape of noses providing security against rotation or of recesses providing security against rotation, and
**in that** the conical contact surface (12) is arranged in ring-shape and forms an included cone angle of 90° at the central longitudinal axis (11) of the fastener element, and
**in that** the features (30) providing security against rotation are exclusively formed in the region of the conical contact surface.

2. A fastener element in accordance with claim 1,
**characterized in that**
the ring gap (20) has a radial dimension in the range between 0 mm and approximately 3 mm.

3. A fastener element in accordance with claim 1 or claim 2, **characterized in that**
the ring gap (20) finishes at an axial spacing (a) before the ring-like contact surface (12) at the rivet section side of the ring-like contact surface (12).

4. A fastener element in accordance with any one of the preceding claims,
**characterized in that**
the guide section (18) is formed as a piercing section and has a ring-like cutting edge (28) at its end remote from the contact surface (12).

5. A fastener element in accordance with any one of the preceding claims,
**characterized in that**
the bore (38) is provided at a position in the fastener element at which a thread is to be formed by screwing in a thread forming or cutting screw (106), wherein the position is provided either in the head part (14) or in the guide section (18) or at least partly in the head part (14) and in the guide section (18).

6. A fastener element in accordance with claim 5,
**characterized in that**
the thread cylinder ends in the axial direction approximately at the position where the ring-like gap (20) ends in front of the ring-like contact surface (18).

7. A component assembly comprising a component (50) and a fastener element (10) in accordance with any one of the preceding claims attached to the fastener element via a rivet connection,
**characterized in that**
the sheet metal part (50) lies in a form fitting manner between the conical contact surface (12) and the tubular rivet section (16) beaded over to a rivet bead and likewise has a conical form in the region of the conical contact surface (12).

8. A component assembly in accordance with claim 7,
**characterized in that**
the features providing security against rotation are realized as noses providing security against rotation, which are pressed into the sheet metal material.

## Revendications

1. Élément de fixation creux destiné au montage, avec faculté de conduction électrique, d'un dispositif de connexion électrique (104), comme une cosse à câble, sur une pièce en tôle (50), dans lequel l'élément de fixation creux (1) comprend une partie de tête (14) et un tronçon de rivet (16), dans lequel le tronçon de rivet (16) se transforme dans la partie de tête (14) via une surface d'appui (12) de forme conique pour la partie en tôle, et il est prévu des caractéristiques de sécurité antirotation (30) au niveau de la surface d'appui de forme conique, l'élément de fixation comportant un perçage (38), dans lequel un tronçon de guidage (18) de forme tubulaire est agencé concentriquement au tronçon de rivet de forme tubulaire (16) et radialement à l'intérieur de celui-ci, et il est prévu une fente annulaire (20) entre le tronçon de guidage (18) et le tronçon de rivet (16), et le tronçon de guidage dépasse au-delà de l'extrémité libre du tronçon de rivet,
**caractérisé en ce que**
l'extrémité libre de la paroi du tronçon de rivet de forme tubulaire (16) est arrondie, vue dans un plan de coupe axial, aussi bien sur le côté radialement extérieur (24) que sur le côté radialement intérieur (26) et présente par exemple une forme en demi-cercle ou une forme en pointe de flèche,
**en ce que** les caractéristiques de sécurité antirotation (30) présentent la forme de doigts de sécurité antirotation ou de renfoncements de sécurité antirotation, et
**en ce que** la surface d'appui de forme conique (12) est agencée sous forme annulaire et forme sur l'axe longitudinal médian (11) de l'élément de fixation un angle de cône inclus de 90°, et
les caractéristiques de sécurité antirotation se trouvent exclusivement dans la région de la surface d'appui de forme conique.

2. Élément de fixation selon la revendication 1,
**caractérisé en ce que** la fente annulaire (20) présente une dimension radiale dans la plage entre 0 mm et environ 3 mm.

3. Élément de fixation selon la revendication 1 ou 2,
**caractérisé en ce que** la fente annulaire (20) se termine à une distance axiale (a) devant la surface d'appui de forme annulaire (12) sur le côté de la surface d'appui annulaire (12) vers le tronçon de rivet.

4. Élément de fixation selon l'une des revendications précédentes,
**caractérisé en ce que** le tronçon de guidage (18) est réalisé comme un tronçon matricé et présente une arête de coupe (28) de forme annulaire au niveau de son extrémité frontale détournée de la surface d'appui (12).

5. Élément de fixation selon l'une des revendications précédentes,
**caractérisé en ce que** le perçage (38) est prévu dans l'élément de fixation à un emplacement auquel il s'agit de réaliser un pas de vis en vissant une vis (106) qui taille ou qui forme un pas de vis, et l'emplacement est prévu soit dans la partie de tête (14) soit dans le tronçon de guidage (18) soit encore au moins partiellement dans la partie de tête (14) et dans le tronçon de guidage (18).

6. Élément de fixation selon la revendication 5,
**caractérisé en ce que** le cylindre taraudé se termine, en direction axiale, approximativement là où la fente annulaire (20) se termine devant la surface d'appui annulaire (18).

7. Élément structurel composite constitué d'un composant (50) et d'un élément de fixation (10), rapporté via une liaison rivetée, selon l'une des revendications précédentes,
**caractérisé en ce que**
la pièce en tôle (50) se trouve en coopération de formes entre la surface d'appui (12) de forme conique et le tronçon de rivet (16) de forme tubulaire rabattu pour former un rebord de rivetage, et présente une configuration conique également dans la région de la surface d'appui (12) de forme conique.

8. Élément structurel composite selon la revendication 7,
**caractérisé en ce que** les caractéristiques de sécurité antirotation sont réalisées sous forme de doigts de sécurité antirotation, qui sont enfoncés dans le matériau de la tôle.
